# EUROPÄISCHE PATENTSCHRIFT

(11) **EP 1 958 800 B1**
(45) Veröffentlichungstag und Bekanntmachung des Hinweises auf die Patenterteilung: **09.03.2011**
(21) Anmeldenummer: 07021440.8
(22) Anmeldetag: 03.11.2007
(51) Int. Cl.: B60G 7/00

(54) **Elektromechanische Stellvorrichtung für Radaufhängungen von Kraftfahrzeugen**
Electromechanical control device for the wheel suspension in motor vehicles
Dispositif de réglage électromécanique pour suspensions de roues de véhicules automobiles

(30) Priorität: 14.02.2007 DE 102007007234
(43) Veröffentlichungstag der Anmeldung: 20.08.2008
(73) Patentinhaber: AUDI AG, 85045 Ingolstadt (DE)
(72) Erfinder: Feigl, Markus, 80935 München (DE)
(74) Vertreter: Asch, Konrad

(56) Entgegenhaltungen:
- EP-A- 0 340 823
- EP-A- 0 363 158
- EP-A- 1 110 846
- WO-A-2006/117343
- DE-A1- 3 836 255
- DE-A1- 19 750 585
- DE-A1-102005 035 872
- DE-C1- 10 164 580
- US-A- 3 173 040
- US-A- 5 086 861
- US-A- 5 491 633

## Beschreibung

Die Erfindung betrifft eine elektromechanische Stellvorrichtung für Radaufhängungen von Kraftfahrzeugen gemäß dem Oberbegriff des Patentanspruches 1.

Eine derartige Stellvorrichtung beschreibt z. B. die EP 1 110 846 B1. Dabei sind der Elektromotor und die Stellvorrichtung in eine Lenk-Spurstange integriert und dienen zur Schaffung eines automatisierten Lenksystems (steer by wire) für Kraftfahrzeuge. Derartige Stellvorrichtungen sind jedoch auch bereits für aktive Radaufhängungen von Kraftfahrzeugen vorgeschlagen worden, wobei sie in radführenden Lenkern beliebiger Bauart angeordnet oder integriert sind. Bei der gattungsbildenden Stellvorrichtung ist das Stellgetriebe durch einen Planetentrieb mit einer radial äußeren Gewindemutter als Eingangselement, einer Gewindespindel als Ausgangselement und dazwischen befindlichen Planetenrädern mit korrespondierenden Gewindeabschnitten gebildet.

Weitere Stellvorrichtungen nach dem Oberbegriff des Anspruchs 1 sind aus US-A-5006861, DE-A-102006020041 und DE-C-10164580 bekannt.

Aufgabe der Erfindung ist es, eine elektromechanische Stellvorrichtung der gattungsgemäßen Art anzugeben, die in ihrem Aufbau robuster und in ihrer Ansteuerung präziser aufgebaut und in ihrer Funktionalität weiter verbessert ist.

Diese Aufgabe wird erfindungsgemäß mit den kennzeichnenden Merkmalen des Patentanspruches 1 gelöst. Vorteilhafte Weiterbildungen der Erfindung beinhalten die weiteren Patentansprüche.

Erfindungsgemäß wird vorgeschlagen, dass in das Gehäuse der Stellvorrichtung ein die Relativverschiebung bzw. Linearverschiebung der Stellstange erfassender Weggeber integriert ist. Mittels eines integrierten Weggebers, etwa ein Linearsensor, kann baulich günstig eine präzise, rückkopplungsgesteuerte Verstellung des Lenkers bzw. der betreffenden Radführung sichergestellt werden. Der Weggeber dient dazu, die absolute Stellposition der Stellvorrichtung zu erfassen.

Mittels des integrierten Weggebers wird ein sicherer Betrieb der Stellvorrichtung im Fahrzeug gewährleistet. Dies kann durch zusätzliche Sensorik weiter unterstützt werden: So kann dem erfindungsgemäßen Weggeber für die Linearverschiebung zumindest ein Drehwinkelgeber zugeordnet sein, der den Drehwinkel des Rotors des Stellantriebs, z. B. ein Elektromotor, erfasst.

Der Drehwinkelgeber kann in raumsparender Weise an das Gehäuse und anschließend an die Wälzlagerung des Eingangselementes des Stellgetriebes und der elektromagnetischen Bremse angeflanscht sein. Der Drehwinkelgeber misst innerhalb einer Umdrehung des Rotors des Elektromotors den Absolutwinkel, so dass dessen Wegsignale aus Sicherheitsgründen zusätzlich zu den Wegsignalen des Weggebers für die Sensierung des Stellweges der Stellstange herangezogen werden können (Redundanz).

Der Drehwinkelgeber kann zudem als sogenannter Resolver ausgebildet sein und ggf. die Komutierung des Elektromotors bzw. dessen Wicklungen übernehmen. Ein zweiter Drehwinkelgeber bzw. Resolver kann als fail safe System bei einem Ausfall des ersten Drehwinkelgebers vorgesehen sein. Des weiteren kann als zusätzliche Sicherheitsfunktion die Temperatur des Elektromotors mittels eines an der Stellvorrichtung angeordneten Temperatursensors überwacht werden.

Alternativ oder zusätzlich kann die Stellvorrichtung eine das Stellgetriebe oder den Stellantrieb im nichtaktivierten Zustand festsetzende Bremse aufweisen. Über die vorgeschlagene Bremse wird das Stellgetriebe nur im Verstellmodus belastet, während es in der überwiegenden Betriebsphase im nichtaktivierten Zustand festgebremst und somit lastfrei geschaltet ist.

Die Bremse kann besonders vorteilhaft als eine elektromagnetische Reibbremse ausgeführt sein, deren mit dem drehbaren Eingangselement des Stellgetriebes verbundene Ankerscheibe im unbestromten Zustand mittels einer gehäusefesten Dauermagnetscheibe festgehalten und im bestromten Zustand mittels eines durch eine elektrische Wicklung initiierten Gegenmagnetfeldes lösbar ist.

Erfindungsgemäß ist der stabförmige Weggeber (insbesondere ein Linearpotentiometer) parallel zur Stellstange angeordnet und mit dieser über ein das Gehäuse einerseits abschließendes, deckelförmiges Abschlussteil gekoppelt sein. Dies ermöglicht eine baulich vorteilhafte, montageleichte Anordnung des Weggebers mit gut zugänglicher Einstellbarkeit des Potentiometers.

Dabei kann das Gehäuse an seiner offenen Stirnseite mittels einer einen Gehäuseabschnitt und das deckelförmige Abschlussteil umschließenden, gummielastischen Schutzmanschette abgedichtet sein. Somit sind sowohl das Stellgetriebe mit Stellstange als auch der Weggeber zuverlässig gegen äußere Einflüsse wie Staub, Feuchtigkeit, etc. geschützt.

In vorteilhafter Weiterbildung der Erfindung kann der Rotor des Elektromotors und das drehbare Eingangselement des Stellgetriebes über einen an das Eingangselement angeformten Lagerhals in dem Gehäuse über zwei zueinander beabstandete Wälzlager "fliegend" gelagert sein. Damit ist eine in axialer Richtung baulich besonders gedrängte Anordnung von Elektromotor und Stellgetriebe innerhalb des Gehäuses ermöglicht.

Alternativ oder zusätzlich kann die Stellvorrichtung für Radaufhängungen als Verdrehsicherung oder Führungseinheit für die Stellstange eine sogenannte Linearführung bzw. Nutwellenführung aufweisen. Hierbei kann die Stellstange an deren der Wälzlagerung abgewandtem Ende axial verschiebbar, aber unverdrehbar geführt sein. Insbesondere kann die Stellstange in Umfangsrichtung formschlüssig in einer in das Gehäuse eingesetzten Kugelbüchse wälzgelagert sein. Dementsprechend ist eine besonders leichtgängige, stickslip freie Verschiebbarkeit der Stellstange bei ermöglichter spielfreier Führung herstellbar; ferner ist eine günstige Kraft- und Momentenaufnahme aus Reaktionen der Radführung im Betrieb des Kraftfahrzeuges gegeben.

Die oben beschriebene Verdrehsicherung bewirkt, dass Drehbewegungen der Stellstange um ihre Längsachse verhindert werden. Im Gegensatz dazu erfolgt in der EP 1 110 846 B1 die Verdrehsicherung der Stellstange durch die Kupplung zwischen der Stellstange und dem Rad.

In baulich und funktionell günstiger Anordnung kann ferner die elektromagnetische Bremse im Bereich der Wälzlagerung des Rotors und des Eingangselementes des Stellgetriebes radial um die Wälzlagerung herum angeordnet sein.

Das Stellgetriebe kann bevorzugt durch einen an sich bekannten Kugelgewindetrieb mit einer Kugelmutter als Eingangselement, einer Gewindespindel als Ausgangselement und dazwischen befindlichen Kugeln als Mitnehmerelemente ausgebildet sein.

Alternativ kann das Stellgetriebe als ein Planeten-Wälz-Gewindespindeltrieb ebenfalls bekannter Bauart ausgebildet sein, mit einer radial äußeren Rillenmutter als Eingangselement, einer radial inneren Gewindespindel als Ausgangselement und mehreren, dazwischen befindlichen Planetenrollen mit unterschiedlichen Rillen, die mit korrespondierenden Rillen der Rillenmutter oder mit korrespondierenden Gewindegängen der Gewindespindel in Eingriff sind.

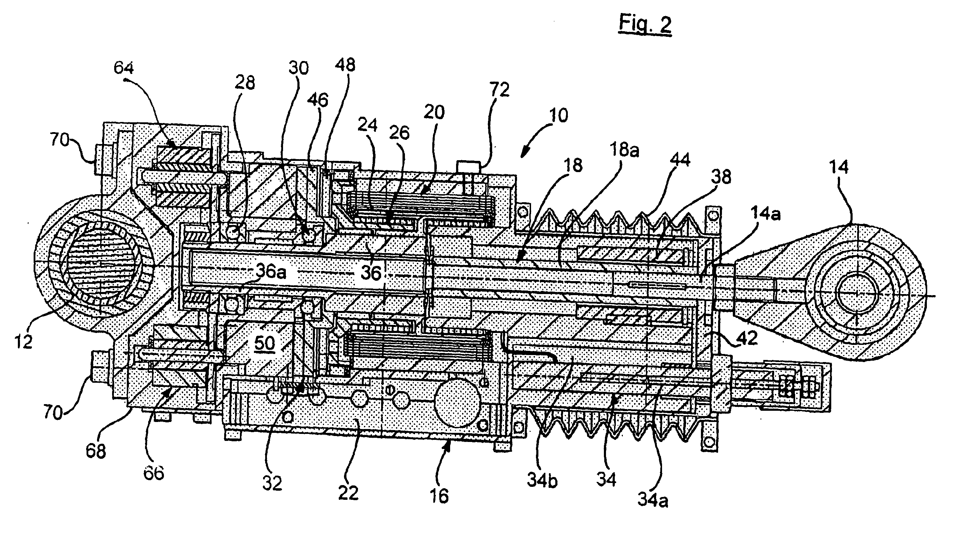

Ein Ausführungsbeispiel der Erfindung ist im folgenden mit weiteren Einzelheiten näher erläutert. Die schematische Zeichnung zeigt in:

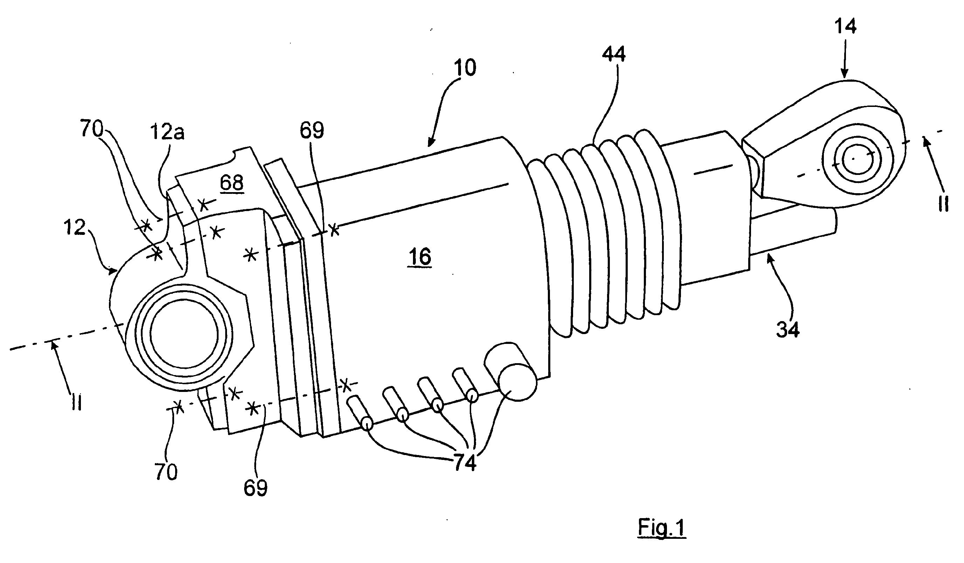

- **Fig. 1**: in raumbildlicher Darstellung eine elektromechanische Stellvorrichtung für Radaufhängungen von Kraftfahrzeugen, die in einen Lenker der Radaufhängung integriert ist, mit einem Elektromotor, einem Stellgetriebe, einer integrierten elektromagnetischen Bremse und einem integrierten Weggeber;
- **Fig.**: **2** einen Längsschnitt durch die Stellvorrichtung gemäß Linie II - II der Fig. 1;
- **Fig.**: **3** eine Prinzipansicht des Stellgetriebes der Stellvorrichtung nach den Fig. 1 und 2, als Planeten-Wälz-Gewindespindel ausgeführt;
- **Fig.**: **4** eine Prinzipansicht eines alternativen Stellgetriebes nach den Fig. 1 und 2, als Kugelgewindetrieb ausgebildet; und
- **Fig.**: **5** eine raumbildliche Ansicht der über eine Kugelbüchse im Gehäuse der Stellvorrichtung geführten Stellstange.

In den **Fig. 1** **und** **2** ist eine elektromechanische Stellvorrichtung 10 dargestellt, die in einen Lenkeranschlüsse 12, 14 aufweisenden Lenker, gebildet durch das Gehäuse 16 und eine Stellstange18 integriert ist. Der Lenker, der über die Lenkeranschlüsse 12, 14 (Kugelgelenke und/oder Gummi-Metall-Hülsengelenke) in eine nicht dargestellte Radführung für Kraftfahrzeuge eingebunden ist, kann sowohl eine Lenkbewegungen übertragende Spurstange oder ein Lenker der Radaufhängung des Kraftfahrzeuges sein. Durch eine Verstellung der Gelenkmittelpunkte der Lenkeranschlüsse 12, 14 zueinander bzw. der wirksamen Länge des Lenkers können abhängig insbesondere von fahrdynamischen Parametern Lenkbewegungen oder Radführungswerte (Nachlauf, Spur, Sturz, etc.) gezielt verändert werden.

Die elektromechanische Stellvorrichtung 10 setzt sich im wesentlichen zusammen aus einem Elektromotor 20 mit radial äußeren Statorwicklungen 22 und einem hohlwellenförmigen Rotor 24, einem Stellgetriebe 26, das die Drehbewegung des Rotors 24 in eine Axialbewegung der zentral innerhalb des Stellgetriebes 26 angeordneten Stellstange 18 umsetzt, eine aus zwei zueinander beabstandet angeordneten Wälzlagern 28, 30 gebildete "fliegende" Lagerung des Stellgetriebes 26 und des Rotors 24, eine radial außerhalb der Wälzlager 28, 30 angeordnete, elektromagnetische Bremse 32 und einem parallel zur Stellstange 18 ausgerichteten, stabförmigen Weggeber 34.

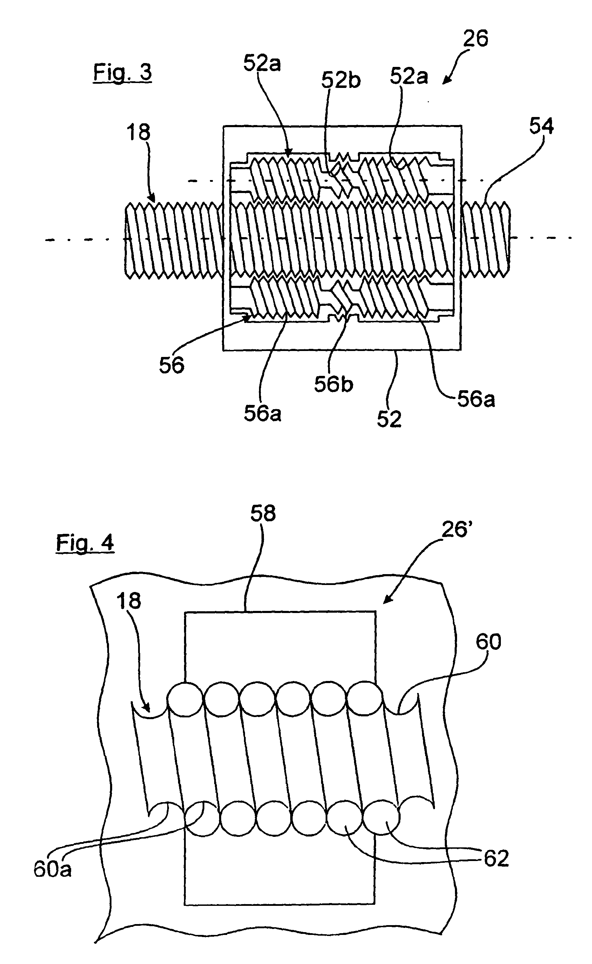

Der Rotor 24 des Elektromotors 20 ist mit dem Eingangsglied 36 (vgl. auch **Fig. 3 und 4**) des Stellgetriebes 26 fest verbunden bzw. mit diesem drehbar gelagert, wobei der an das Eingangsglied 36 angeformte Lagerhals 36a (vgl. **Fig. 2**) die als Axial- und Radiallager ausgeführten Wälzlager 28, 30 aufnimmt. Das Eingangsglied 36 mit dem Rotor 24 ist somit axial unverschiebbar, jedoch drehbar in dem Gehäuse 16 wie aus der Zeichnung **Fig. 2** ersichtlich gelagert.

Koaxial innerhalb des Eingangsgliedes 36 des Stellgetriebes 26 - das nachstehend anhand der **Fig. 3 und 4** näher erläutert ist - und im Bereich des Lenkeranschlusses 14 ist die Stellstange 18 über das Stellgetriebe 26 axial verschiebbar gelagert.

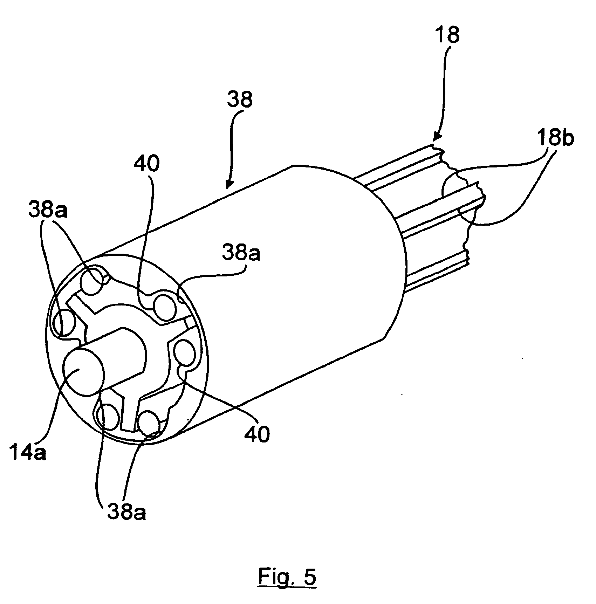

Die Lagerung in Nähe des Lenkeranschlusses 14 ist dabei mittels einer in das Gehäuse 16 fest eingesetzten Kugelbüchse 38 realisiert, die die Stellstange 18 in Umfangsrichtung formschlüssig linear führt und gegen Verdrehung sichert. Dazu (vgl. **Fig. 5**) sind in den mit der Kugelbüchse 38 korrespondierenden Abschnitt 18a der Stellstange 18 radial nach außen abragende, linear verlaufende Wälzbahnen 18b eingearbeitet, die mit dazwischen positionierten, radial nach innen abragenden, korrespondierenden Wälzbahnen 38a und dazwischen eingesetzten Wälzelementen bzw. Kugeln 40 (nur angedeutet) zusammenwirken und eine leichtgängige Linearführung der Stellstange 18 sicherstellen. Der Lenkeranschluss 14, ein Gummi-Metall-Hülsenlager, ist mittels eines angeformten Schraubbolzens 14a in die teils hohl ausgeführte Stellstange 18a eingeschraubt.

Parallel zur Kugelbüchse 38 (**Fig. 1** **und** **2**) ist in das Gehäuse 16 der Weggeber 34 eingesetzt, der mittels eines an sich bekannten Linearpotentiometers gebildet ist, dessen stabförmiges Geberelement 34a über ein deckelförmiges, das Gehäuse 16 stirnseitig abdeckendes Abschlussteil 42 mit der Stellstange 18 gekoppelt ist und bei einer Verschiebung der Stellstange 18 an der korrespondierenden Messspule 34b des Weggebers 34 entlang gleitet und dementsprechend der Position der Stellstange 18 entsprechende Wegsignale generiert. Das Abschlussteil 42 ist dabei wie ersichtlich mit der Stellstange 18 und dem Geberelement 34a verschraubt.

Zur Abdichtung des stirnseitig offenen Gehäuses 16 ist eine gummielastische Schutzmanschette 44 angeordnet, die wie ersichtlich auf das Gehäuse 16 aufgeschoben und mittels Schlauchbinder an dem Gehäuse 16 und an dem Abschlussteil 42 dicht befestigt ist.

Die radial um die Wälzlagerung 28, 30 angeordnete, elektromagnetische Reibbremse 32 setzt sich im wesentlichen zusammen aus einer mit dem drehbaren Eingangselement 36 des Stellgetriebes 26 verbundene Ankerscheibe 46, die im unbestromten Zustand mittels eines gehäusefesten Dauermagnetelementes 48 festgehalten und im bestromten Zustand mittels eines durch eine elektrische Wicklung 50 initiierten Gegenmagnetfeldes lösbar ist.

Gemäß **Fig. 3** der Zeichnung ist das Stellgetriebe 26 als ein Planeten-Wälz-Gewindespindeltrieb ausgebildet, mit einer radial äußeren Rillenmutter 52 als das Eingangselement 36 (der angeformte Lagerhals 36a zur "fliegenden" Wälzlagerung ist der Einfachheit halber in der Prinzipskizze nicht dargestellt), der radial inneren Gewindespindel 54 als Teil der Stellstange 18 und mehreren, dazwischen befindlichen Planetenrollen 56 mit jeweils unterschiedlichen Rillen 56a, 56b, die mit korrespondierenden Rillen 52a, 52b der Rillenmutter 52 oder mit korrespondierenden Gewindegängen der Gewindespindel 54 in Eingriff sind. Aufgrund der Steigung der Gewindespindel 52 im Gegensatz zu den rotationssymmetrischen Rillen 52a, 52b der Rillenmutter 52 entsteht bei einer Relativdrehung von Rillenmutter 52 zu Stellstange 18 bzw. der korrespondierenden Gewindespindel 54 die Axialverschiebung der Stellstange 18.

Gemäß **Fig. 4** der Zeichnung ist das Stellgetriebe (26') durch einen an sich bekannten Kugelgewindetrieb mit einer Kugelmutter 58 als dem Eingangselement 36, einer Gewindespindel 60 als Funktionsteil der Stellstange 18 und dazwischen befindlichen Kugeln 62 ausgebildet. Durch Verdrehen der Kugelmutter 58 mit den entsprechenden, als Wälzbahnen 58a ausgeführten Gewindegängen wird wiederum die Stellstange 18 bzw. die Gewindespindel 60 mit den korrespondierenden, als Wälzbahnen 60a ausgeführten Gewindegängen über die abwälzenden Kugeln 62 entsprechend axial verschoben.

An das Gehäuse 16 (**Fig. 2**) sind anschließend an die Wälzlagerung 28, 30 des Eingangselementes 36 des Stellgetriebes 26 und der elektromagnetischen Bremse 32 zusätzlich zwei Drehwinkelgeber 64, 66 (sogenannte Resolver) vorgesehen, die in einem separaten Gehäuseteil 68 angeordnet sind. Das Gehäuseteil 68 ist an das Gehäuse 16 fest mittels mehrerer angedeuteter Schraubverbindungen 69 angeflanscht.

Die Drehwinkelgeber 64, 66 sind in nicht näher ausgeführter Weise über das Eingangselement 36 angetrieben und definieren innerhalb einer jeden Umdrehung des Rotors 24 bzw. des Eingangselementes 36 des Stellgetriebes 26 dessen Absolutdrehwinkel, der bei Summierung der Umdrehungen zusätzlich den Verschiebeweg der Stellstange 18 abbildet. Durch die Verwendung zweier Drehwinkelgeber 64, 66 ist die Redundanz des Steuerungssystems verbessert, da bei Ausfall eines Drehwinkelgebers stets ein weiteres Signal zur Verfügung steht. Des weiteren wird über die Drehwinkelgeber 64, 66 der bürstenlose Elektromotor 20 komutiert.

An dem Gehäuseteil 68 ist das Gehäuse 12a des Lenkeranschlusses 12, der hier durch ein Kugelgelenk gebildet ist, mittels Schraubverbindungen 70 angeschraubt.

Schließlich ist die Temperatur des Elektromotors 20 mittels eines an der Stellvorrichtung 10 bzw. am Gehäuse 16 angeordneten Temperatursensors 72 überwacht, so dass Überbelastungen des Elektromotors 20 durch entsprechende, steuerungstechnische Maßnahmen vermeidbar sind.

Im nicht aktivierten, stromlosen Zustand der Stellvorrichtung 10 sind der Rotor 24 des Elektromotors 20 und das Eingangselement 36 des Stellgetriebes 26 durch die elektromagnetische Reibbremse 32 festgebremst, so dass die axiale Länge der Verstellvorrichtung 10 bzw. des Lenkers 17 mit den Lenkeranschlüssen 12, 14 unverändert bleibt.

Bei einer entsprechenden, elektrischen Ansteuerung der Verstellvorrichtung 10 (Anschlussstecker 74) wird die Reibbremse 32 durch Ansteuern der Wicklung 50 und damit verbundenes Erzeugen eines Gegenmagnetfeldes gelöst und gleichzeitig der Elektromotor 20 im Linkslauf- oder Rechtslaufbetrieb aktiviert. Daraus resultiert eine entsprechende Verdrehung der Rillenmutter 52 des Stellgetriebes 26 gemäß **Fig. 3** oder der Kugelmutter 58 des Stellgetriebes 26' der **Fig. 4**.

Diese Verdrehung bewirkt wiederum eine axiale Verschiebung der Stellstange 18 mit dem Lenkeranschluss 14 und damit eine gezielte Längenänderung des Lenkers 17.

Der Verstellweg der Stellstange 18 wird dabei mittels des stabförmigen Weggebers 34 und zusätzlich durch entsprechende Umrechnung der Absolutdrehwinkel der Drehwinkelgeber 64, 66 erfasst und in einem elektronischen Steuergerät (nicht dargestellt) ausgewertet.

Nach erfolgter Längenänderung des Lenkers 17 wird der Elektromotor 20 und die Wicklung 50 der elektromagnetischen Reibbremse 32 wieder stromlos geschaltet, wobei die Ankerscheibe 46 der Reibbremse 32 durch das nun überwiegende Dauermagnetfeld des Dauermagnetelementes 48 festgebremst ist.

Die Verstellvorrichtung 10 bzw. deren Gehäuse 16 kann ggf. mit einer inneren Entlüftung entweder über die Schutzmanschette 44 (Entlüftungsöffnung), über atmungsaktive Membranen oder mittels einer separat angeschlossenen Entlüftungsleitung versehen sein. Es versteht sich, dass die Entlüftung so auszuführen ist, dass keine Feuchtigkeit oder Schmutz in die Verstelleinrichtung 10 eindringen können.

## Patentansprüche

1. Stellvorrichtung, insbesondere elektromechanische Stellvorrichtung für Radaufhängungen von Kraftfahrzeugen, die in einen Lenker der Radaufhängung integriert mittels eines Stellantriebs (20) abhängig von Steuerungsparametem dessen wirksame Länge verändert, wobei der Stellantrieb (20) über eine axial verschiebbar geführte Stellstange (18) auf den einen Lenkeranschluss (14) wirkt, während ein zweiter Lenkeranschluss (12) mittelbar oder unmittelbar an dem Gehäuse (16) ausgebildet ist, und wobei ein Weggeber (34) die Linearverschiebung der Stellstange (18) erfasst, **dadurch gekennzeichnet, dass** der Weggeber (34) in das Gehäuse (16) der Stellvorrichtung (10) integriert ist und der stabförmige Weggeber (34) parallel verstellbar zur Stellstange (18) angeordnet ist, wobei der Weggeber (34) über ein das Gehäuse (16) einerseits abschließendes, deckelförmiges Abschlussteil (42) mit der Stellstange (18) gekoppelt ist.

2. Stellvorrichtung nach Anspruch 1, **dadurch gekennzeichnet, dass** dem Stellantrieb (20) ein Stellgetriebe (26) zugeordnet ist, das eine Drehbewegung des Stellantriebs (20) in eine Linearbewegung der Stellstange (18) wandelt.

3. Stellvorrichtung nach Anspruch 2, **dadurch gekennzeichnet, dass** der Stellantrieb ein Elektromotor (20) mit einem drehbar und axial unverschiebbar in einem Gehäuse (16) gelagerten, hohlwellenförmigen Rotor (24) ist, dessen Drehbewegung vom Stellgetriebe (26) in eine Linearbewegung umgewandelt wird.

4. Stellvorrichtung nach einem der Ansprüche 1 bis 3, **dadurch gekennzeichnet, dass** der Stellvorrichtung ein Drehwinkelgeber (64, 66) zugeordnet ist, der einen Drehwinkel des Stellantriebs (20) erfasst.

5. Stellvorrichtung nach Anspruch 4, **dadurch gekennzeichnet, dass** der Drehwinkelgeber (64, 66) an das Gehäuse (16) anschließend an die Wälzlagerung (28, 30) eines Eingangselementes (36) des Stellgetriebes (26) angeflanscht ist.

6. Stellvorrichtung nach einem der vorhergehenden Ansprüche, **dadurch gekennzeichnet, dass** die Temperatur des Elektromotors (20) mittels eines an der Stellvorrichtung (10) angeordneten Temperatursensors (72) überwacht ist.

7. Stellvorrichtung für Radaufhängungen von Kraftfahrzeugen nach einem der vorhergehenden Ansprüche, die in einen Lenker der Radaufhängung integriert mittels eines Stellantriebs (20) abhängig von Steuerungsparametern dessen wirksame Länge verändert, wobei vorzugsweise ein drehbar und axial unverschiebbar in einem Gehäuse (16) gelagerter, hohlwellenförmiger Rotor (24) des Stellantriebs (20) radial um ein dessen Drehbewegung in eine Linearbewegung wandelndes Stellgetriebe (26) angeordnet ist, und das Stellgetriebe (26) oder der Stellantrieb (20) über eine axial verschiebbar geführte Stellstange (18) auf den einen Lenkeranschluss (14) wirkt, während ein zweiter Lenkeranschluss (12) mittelbar oder unmittelbar an dem Gehäuse (16) ausgebildet ist, **dadurch gekennzeichnet, dass** in das Gehäuse (16) der Stellvorrichtung (10) eine das Stellgetriebe (26) bzw. den Stellantrieb (20) im nichtaktivierten Zustand festsetzende Bremse (32) integriert ist.

8. Stellvorrichtung nach Anspruch 7, **dadurch gekennzeichnet, dass** die Bremse als eine elektromagnetische Reibbremse (32) ausgeführt ist, deren mit dem drehbaren Eingangselement (36) des Stellgetriebes (26) verbundene Ankerscheibe (46) im unbestromten Zustand mittels eines gehäusefesten Dauermagnetelementes (48) festgehalten und im bestromten Zustand mittels eines durch eine elektrische Wicklung (50) initiierten Gegenmagnetfeldes lösbar ist.

9. Stellvorrichtung nach einem der vorhergehenden Ansprüche, **dadurch gekennzeichnet, dass** das Gehäuse (16) an seiner offenen Stirnseite mittels einer einen Gehäuseabschnitt und das deckelförmige Abschlussteil (42) umschließenden, gummielastischen Schutzmanschette (44) abgedichtet ist.

10. Stellvorrichtung nach einem der Ansprüche 7 oder 8, **dadurch gekennzeichnet, dass** die elektromagnetische Bremse (32) im Bereich der Wälzlagerung (28, 30) des Rotors (24) und des Eingangselementes (36) des Stellgetriebes (26) radial um die Wälzlagerung (28, 30) herum angeordnet ist.

11. Stellvorrichtung für Radaufhängungen von Kraftfahrzeugen nach einem der vorhergehenden Ansprüche, die in einen Lenker der Radaufhängung integriert mittels eines Stellantriebs (20) abhängig von Steuerungsparametern dessen wirksame Länge verändert, wobei vorzugsweise ein drehbar und axial unverschiebbar in einem Gehäuse (16) gelagerter, hohlwellenförmiger Rotor (24) des Elektromotors (20) radial um ein dessen Drehbewegung in eine Linearbewegung wandelndes Stellgetriebe (26) angeordnet ist, und das Stellgetriebe (26) oder der Stellantrieb (20) über eine axial verschiebbar geführte Stellstange (18) auf den einen Lenkeranschluss (14) wirkt, während ein zweiter Lenkeranschluss (12) mittelbar oder unmittelbar an dem Gehäuse (16) ausgebildet ist, **dadurch gekennzeichnet, dass** in dem Gehäuse (16) der Stellvorrichtung als Verdrehsicherung für die Stellstange (18) eine Linearführung (38) vorgesehen ist.

12. Stellvorrichtung nach einem der Ansprüche 2 bis 11, **dadurch gekennzeichnet, dass** das Stellgetriebe (26) durch einen Kugelgewindetrieb mit einer Kugelmutter (58) als Eingangselement, einer Gewindespindel (60) als Ausgangselement und dazwischen befindlichen Kugeln (62) gebildet ist.

13. Stellvorrichtung nach einem der Ansprüche 2 bis 11, **dadurch gekennzeichnet, dass** das Stellgetriebe (26) als ein Planeten-Wälz-Gewindespindeltrieb ausgebildet ist, mit einer radial äußeren Rillenmutter (52) als Eingangselement, einer radial inneren Gewindespindel (54) als Ausgangselement und mehreren, dazwischen befindlichen Planetenrollen (56) mit unterschiedlichen Rillen (56a, 56b), die mit korrespondierenden Rillen (52a, 52b) der Rillenmutter (52) oder mit korrespondierenden Gewindegängen der Gewindespindel (54) in Eingriff sind.

14. Stellvorrichtung nach einem der vorhergehenden Ansprüche 3 bis 13, **dadurch gekennzeichnet, dass** der Rotor (24) des Elektromotors (20) und das drehbare Eingangselement (36) des Stellgetriebes (26) über einen an das Eingangselement (36) angeformten Lagerhals (36a) in dem Gehäuse (16) über zwei zueinander beabstandete Wälzlager (28, 30) "fliegend" gelagert sind.

15. Stellvorrichtung nach einem der vorhergehenden Ansprüche, **dadurch gekennzeichnet, dass** die Stellstange (18) an deren der Wälzlagerung (28, 30) abgewandtem Ende axial verschiebbar, aber unverdrehbar geführt ist.

16. Stellvorrichtung nach einem der vorhergehenden Ansprüche, **dadurch gekennzeichnet, dass** die Stellstange (18) in Umfangsrichtung formschlüssig in einer fest in das Gehäuse (16) eingesetzten Kugelbüchse (38) wälzgelagert ist.

## Claims

1. Actuating device, in particular electromechanical actuating device for wheel suspensions of motor vehicles, which actuating device, integrated in a link of the wheel suspension, varies the effective length of said link by means of an actuating drive (20) as a function of control parameters, with the actuating drive (20) acting via an axially movably guided actuating rod (18) on one link connection (14), while a second link connection (12) is formed indirectly or directly on the housing (16), and with a travel sensor (34) measuring the linear displacement of the actuating rod (18), **characterized in that** the travel sensor (34) is integrated into the housing (16) of the actuating device (10) and the rod-shaped travel sensor (34) is arranged so as to be adjustable parallel to the actuating rod (18), with the travel sensor (34) being coupled to the actuating rod (18) via a lid-shaped closure part (42) which closes off the housing (16) at one side.

2. Actuating device according to Claim 1, **characterized in that** the actuating drive (20) is assigned an actuating gearing (26) which converts a rotational movement of the actuating drive (20) into a linear movement of the actuating rod (18).

3. Actuating device according to Claim 2, **characterized in that** the actuating drive is an electric motor (20) with a hollow-shaft-shaped rotor (24) which is mounted so as to be rotatable and axially immovable in a housing (16) and whose rotational movement is converted by the actuating gearing (26) into a linear movement.

4. Actuating device according to one of Claims 1 to 3, **characterized in that** the actuating device is assigned a rotational angle sensor (64, 66) which measures a rotational angle of the actuating drive (20).

5. Actuating device according to Claim 4, **characterized in that** the rotational angle sensor (64, 66) is flange-mounted on the housing (16) adjacent to the rolling bearing arrangement (28, 30) of an input element (36) of the actuating gearing (26).

6. Actuating device according to one of the preceding claims, **characterized in that** the temperature of the electric motor (20) is monitored by means of a temperature sensor (72) arranged on the actuating device (10).

7. Actuating device for wheel suspensions of motor vehicles according to one of the preceding claims, which actuating device, integrated in a link of the wheel suspension, varies the effective length of said link by means of an actuating drive (20) as a function of control parameters, with a hollow-shaft-shaped rotor (24), which is mounted so as to be rotatable and axially immovable in a housing (16), of the actuating drive (20) being preferably arranged radially around an actuating gearing (26) which converts the rotational movement of said rotor into a linear movement, and with the actuating gearing (26) or the actuating drive (20) acting via an axially movably guided actuating rod (18) on one link connection (14), while a second link connection (12) is formed indirectly or directly on the housing (16), **characterized in that** a brake (32) which arrests the actuating gearing (26) or the actuating drive (20) in the non-activated state is integrated into the housing (16) of the actuating device (10).

8. Actuating device according to Claim 7, **characterized in that** the brake is designed as an electromagnetic friction brake (32) whose armature disc (46), which is connected to the rotatable input element (36) of the actuating gearing (26), is held stationary in the electrically deenergized state by means of a permanent magnet element (48) which is fixed with respect to the housing, and said armature disc (46) can be released in the electrically energized state by means of an opposing magnetic field initiated by an electrical coil (50).

9. Actuating device according to one of the preceding claims, **characterized in that** the housing (16) is sealed off at its open end side by means of a resiliently elastic protective sleeve (44) which surrounds a housing section and the lid-shaped closure part (42).

10. Actuating device according to one of Claims 7 or 8, **characterized in that**, in the region of the rolling bearing arrangement (28, 30) of the rotor (24) and the input element (36) of the actuating gearing (26), the electromagnetic brake (32) is arranged radially around the rolling bearing arrangement (28, 30).

11. Actuating device for wheel suspensions of motor vehicles according to one of the preceding claims, which actuating device, integrated in a link of the wheel suspension, varies the effective length of said link by means of an actuating drive (20) as a function of control parameters, with a hollow-shaft-shaped rotor (24), which is mounted so as to be rotatable and axially immovable in a housing (16), of the electric motor (20) being preferably arranged radially around an actuating gearing (26) which converts the rotational movement of said rotor into a linear movement, and with the actuating gearing (26) or the actuating drive (20) acting via an axially movably guided actuating rod (18) on one link connection (14), while a second link connection (12) is formed indirectly or directly on the housing (16), **characterized in that** a linear guide (38) is provided in the housing (16) of the actuating device as rotation prevention means for the actuating rod (18).

12. Actuating device according to one of Claims 2 to 11, **characterized in that** the actuating gearing (26) is formed by a ball-screw drive with a ball nut (58) as an input element, a threaded spindle (60) as an output element and balls (62) positioned in between.

13. Actuating device according to one of Claims 2 to 11, **characterized in that** the actuating gearing (26) is designed as a planetary rolling threaded spindle drive, having a radially outer grooved nut (52) as an input element, a radially inner threaded spindle (54) as an output element, and a plurality of interposed planet rollers (56) with different grooves (56a, 56b) which are in engagement with corresponding grooves (52a, 52b) of the grooved nut (52) or with corresponding thread turns of the threaded spindle (54).

14. Actuating device according to one of the preceding Claims 3 to 13, **characterized in that** the rotor (24) of the electric motor (20) and the rotatable input element (36) of the actuating gearing (26) are mounted with a bearing journal (36a), which is integrally formed on the input element (36), in a "floating" manner in the housing (16) by means of two spaced-apart rolling bearings (28, 30).

15. Actuating device according to one of the preceding claims, **characterized in that** the actuating rod (18) is guided in an axially movable but non-rotatable manner at its end facing away from the rolling bearing arrangement (28, 30).

16. Actuating device according to one of the preceding claims, **characterized in that** the actuating rod (18) is rolling-bearing-mounted in a positively locking manner in the circumferential direction in a spherical liner (38) inserted fixedly into the housing (16).

## Revendications

1. Dispositif de réglage, en particulier dispositif de réglage électromécanique pour suspensions de roues de véhicules automobiles, qui est intégré dans un bras oscillant de la suspension de roues et modifie sa longueur efficace au moyen d'un entraînement de réglage (20) en fonction de paramètres de commande, l'entraînement de réglage (20) agissant par le biais d'une tige de réglage (18) guidée de manière déplaçable axialement sur un raccord de bras oscillant (14), tandis qu'un deuxième raccord de bras oscillant (12) est réalisé de manière indirecte ou directe sur le boîtier (16), et un capteur de position (34) détectant le déplacement linéaire de la tige de réglage (18), **caractérisé en ce que** le capteur de position (34) est intégré dans le boîtier (16) du dispositif de réglage (10) et le capteur de position en forme de barre (34) est disposé de manière déplaçable parallèlement à la tige de réglage (18), le capteur de position (34) étant accouplé à la tige de réglage (18) par le biais d'une partie de terminaison (42) en forme de couvercle fermant d'un côté le boîtier (16).

2. Dispositif de réglage selon la revendication 1, **caractérisé en ce que** l'on associe un mécanisme de réglage (26) à l'entraînement de réglage (20), lequel convertit un mouvement de rotation de l'entraînement de réglage (20) en un mouvement linéaire de la tige de réglage (18).

3. Dispositif de réglage selon la revendication 2, **caractérisé en ce que** l'entraînement de réglage est un moteur électrique (20) avec un rotor (24) monté de manière rotative et non déplaçable axialement dans un boîtier (16), en forme d'arbre creux, dont le mouvement de rotation est converti par le mécanisme de réglage (26) en un mouvement linéaire.

4. Dispositif de réglage selon l'une quelconque des revendications 1 à 3, **caractérisé en ce que** le dispositif de réglage est associé à un capteur d'angle de rotation (64, 66) qui détecte un angle de rotation de l'entraînement de réglage (20).

5. Dispositif de réglage selon la revendication 4, **caractérisé en ce que** le capteur d'angle de rotation (64, 66) est bridé au boîtier (16) à la suite du support sur palier à roulement (28, 30) d'un élément d'entrée (36) du mécanisme de réglage (26).

6. Dispositif de réglage selon l'une quelconque des revendications précédentes, **caractérisé en ce que** la température du moteur électrique (20) est contrôlée au moyen d'un capteur de température (72) disposé sur le dispositif de réglage (10).

7. Dispositif de réglage pour suspensions de roues de véhicules automobiles selon l'une quelconque des revendications précédentes, qui est intégré dans un bras oscillant de la suspension de roues et modifie sa longueur efficace au moyen d'un entraînement de réglage (20) en fonction de paramètres de commande, un rotor (24) de l'entraînement de réglage (20), monté de manière rotative et non déplaçable axialement dans un boîtier (16), en forme d'arbre creux, étant de préférence disposé radialement autour d'un mécanisme de réglage (26) convertissant son mouvement de rotation en un mouvement linéaire, et le mécanisme de réglage (26) ou l'entraînement de réglage (20) agit par le biais d'une tige de réglage (18) guidée de manière déplaçable axialement sur ledit un raccord de bras oscillant (14), tandis qu'un deuxième raccord de bras oscillant (12) est réalisé de manière indirecte ou directe sur le boîtier (16), **caractérisé en ce qu'**un frein (32) fixant le mécanisme de réglage (26) ou l'entraînement de réglage (20) dans l'état non activé est intégré dans le boîtier (16) du dispositif de réglage (10).

8. Dispositif de réglage selon la revendication 7, **caractérisé en ce que** le frein est réalisé sous forme de frein à friction électromagnétique (32), dont le disque d'armature (46) connecté à l'élément d'entrée rotatif (36) du mécanisme de réglage (26) est fixé dans l'état non parcouru par le courant au moyen d'un élément à aimantation permanente fixé au boîtier (48) et peut être desserré au moyen d'un champ magnétique opposé amorcé par un enroulement électrique (50) dans l'état parcouru par le courant.

9. Dispositif de réglage selon l'une quelconque des revendications précédentes, **caractérisé en ce que** le boîtier (16) est rendu étanche au niveau de son côté frontal ouvert au moyen d'une manchette de protection (44) en caoutchouc élastomère entourant une portion du boîtier et la partie de terminaison (42) en forme de couvercle.

10. Dispositif de réglage selon l'une quelconque des revendications 7 ou 8, **caractérisé en ce que** le frein électromagnétique (32) est disposé dans la région du support sur palier à roulement (28, 30) du rotor (24) et de l'élément d'entrée (36) du mécanisme de réglage (26) radialement autour du support sur palier à roulement (28, 30).

11. Dispositif de réglage pour suspensions de roues de véhicules automobiles selon l'une quelconque des revendications précédentes, qui est intégré dans un bras oscillant de la suspension de roues et modifie sa longueur efficace au moyen d'un entraînement de réglage (20) en fonction de paramètres de commande, un rotor (24) du moteur électrique (20), monté de manière rotative et non déplaçable axialement dans un boîtier (16), en forme d'arbre creux, étant de préférence disposé radialement autour d'un mécanisme de réglage (26) convertissant son mouvement de rotation en un mouvement linéaire, et le mécanisme de réglage (26) ou l'entraînement de réglage (20) agit par le biais d'une tige de réglage (18) guidée de manière déplaçable axialement sur ledit un raccord de bras oscillant (14), tandis qu'un deuxième raccord de bras oscillant (12) est réalisé de manière indirecte ou directe sur le boîtier (16), **caractérisé en ce qu'**un guidage linéaire (38) est prévu dans le boîtier (16) du dispositif de réglage en tant que fixation en rotation pour la tige de réglage (18).

12. Dispositif de réglage selon l'une quelconque des revendications 2 à 11, **caractérisé en ce que** le mécanisme de réglage (26) est formé par une vis d'entraînement à billes avec un écrou à billes (58) servant d'élément d'entrée, une broche filetée (60) servant d'élément de sortie et des billes (62) situées entre eux.

13. Dispositif de réglage selon l'une quelconque des revendications 2 à 11, **caractérisé en ce que** le mécanisme de réglage (26) est réalisé sous forme de vis d'entraînement à billes à roulement planétaire, avec un écrou rainuré radialement extérieur (52) servant d'élément d'entrée, une broche filetée radialement intérieure (54) servant d'élément de sortie et plusieurs rouleaux planétaires (56) situés entre eux, avec différentes rainures (56a, 56b), qui sont en prise avec des rainures correspondantes (52a, 52b) de l'écrou rainuré (52) ou avec des pas de filetage correspondants de la broche filetée (54).

14. Dispositif de réglage selon l'une quelconque des revendications 3 à 13, **caractérisé en ce que** le rotor (24) du moteur électrique (20) et l'élément d'entrée rotatif (36) du mécanisme de réglage (26) sont montés de manière "volante" par le biais d'un collet de palier (36a) façonné sur l'élément d'entrée (36) dans le boîtier (16), par le biais de deux paliers à roulement espacés l'un de l'autre (28, 30).

15. Dispositif de réglage selon l'une quelconque des revendications précédentes, **caractérisé en ce que** la tige de réglage (18) est guidée de manière déplaçable axialement, mais de manière non rotative, à son extrémité opposée au support sur palier à roulement (28, 30).

16. Dispositif de réglage selon l'une quelconque des revendications précédentes, **caractérisé en ce que** la tige de réglage (18) est montée sur palier à roulement par engagement positif dans la direction périphérique dans une douille sphérique (38) insérée fixement dans le boîtier (16).
